# EUROPÄISCHE PATENTANMELDUNG

(11) **EP 0 625 821 A2**
(43) Veröffentlichungstag der Anmeldung: **23.11.1994**
(21) Anmeldenummer: 94107451.0
(22) Anmeldetag: 13.05.1994
(51) Int. Cl.: H02P 6/02, H02M 7/5387

(54) **Schaltungsanordnung für eine induktive Last**

(30) Priorität: 21.05.1993 DE 4317044
(71) Anmelder: Heidelberger Druckmaschinen Aktiengesellschaft, D-69115 Heidelberg (DE)
(72) Erfinder: Meyer, Helmut, D-69168 Wiesloch (DE); Schunn, Johann, D-69181 Leimen (DE)
(74) Vertreter: Stoltenberg, Heinz-Herbert Baldo

(57) **Zusammenfassung**

Die Hysterese eines Zwei-Punkt-Reglers ist üblicherweise so festgelegt, daß die damit verbundenen Stromschwankungen prozentual in der Größenordnung von 10-20% des Nennstromes liegen. Problematisch ist dies bei Antrieben, die über einen weiten Drehzahlbereich arbeiten. So lassen sich kleine Ströme, beispielsweise ein Strom von 5% des Nennstromes, nicht einstellen, ohne daß der Stromregler in diesem Bereich eine Sprungstelle aufweisen würde - der Stromregler arbeitet also in dem Bereich kleiner Ströme undefiniert.

Die Aufgabe der Erfindung besteht darin, eine Schaltungsanordnung vorzuschlagen, die eine verläßliche Arbeitsweise des Stromreglers auch im Bereich kleiner Ströme ermöglicht.

Die Aufgabe wird dadurch gelöst, daß eine Steuerelektronik 16 vorgesehen ist, die die Hysterese Δ I bzw. die Frequenz des Stromreglers 12 in Abhängigkeit vom Strom I vorgibt.

## Beschreibung

Die Erfindung betrifft eine Schaltungsanordnung für eine induktive Last mit einem Rotor und mindestens einer Wicklung, wobei die Wicklung über einen Gleichspannungs-Zwischenkreis und mindestens ein schaltbares Halbleiterventil einer Leistungsendstufe bestromt wird und wobei die Stromregelung über einen hysteresebehafteten Stromregler erfolgt.

Die Hysterese eines Zwei-Punkt-Reglers ist üblicherweise so festgelegt, daß die damit verbundenen Stromschwankungen prozentual in der Größenordnung von 10-20% des Nennstromes liegen. Problematisch ist dies bei Antrieben, die über einen weiten Drehzahlbereich arbeiten. So lassen sich kleine Ströme, beispielsweise ein Strom von 5% des Nennstromes, nicht einstellen, ohne daß der Stromregler in diesem Bereich eine Sprungstelle aufweisen würde - der Stromregler arbeitet also in dem Bereich kleiner Ströme nicht zufriedenstellend.

Die Aufgabe der Erfindung besteht darin, eine Schaltungsanordnung vorzuschlagen, die eine verläßliche Arbeitsweise des Stromreglers auch im Bereich kleiner Ströme ermöglicht.

Die Aufgabe wird dadurch gelöst, daß eine Steuerelektronik vorgesehen ist, die die Hysterese bzw. die Frequenz des Stromreglers in Abhängigkeit von dem Strom vorgibt.

Gemäß einer vorteilhaften Weiterbildung der erfindungsgemäßen Schaltungsanordnung wird vorgeschlagen, daß die Hysterese bzw. die Frequenz eine funktionale Abhängigkeit vom Strom-Sollwert oder vom Strom-Istwert besitzt. Insbesondere besteht zwischen dem Strom und der Hysterese bzw. der Frequenz eine proportionale, d. h. eine lineare Abhängigkeit.

Eine weitere Ausführungsform der erfindungsgemäßen Schaltungsanordnung sieht vor, daß der Strom-Mittelwert proportional zum Strom-Sollwert bzw. zum Strom-Istwert ist.

Insbesondere durch diese Ausgestaltungen führt die erfindungsgemäße Schaltungsanordnung dazu, daß bei niedrigen Strömen eine geringe Hysterese bzw. eine hohe Schaltfrequenz auftritt, während bei hohen Strömen eine relativ große Hysterese mit einer entsprechend niedrigen Schaltfrequenz zu finden ist. Auf diese Art und weise lassen sich auch im Bereich kleiner Ströme exakte Stromwerte einstellen.

Gemäß einer vorteilhaften Weiterbildung der erfindungsgemäßen Schaltungsanordnung ist vorgesehen, daß die Steuerelektronik die Hysterese bzw. die Frequenz so vorgibt, daß die Schaltverluste der schaltbaren Halbleiterventile der Leistungsendstufe die thermisch maximal zulässige Grenze nicht überschreiten. Obwohl die Schaltverluste unter anderem proportional zur Frequenz sind, kommen sie im Bereich kleiner Ströme kaum zum Tragen, da hier die zu schaltenden Ströme sehr gering sind, so daß trotz steigender Frequenz die thermische Belastung wenig ins Gewicht fällt. Durch die zuletzt genannte Ausgestaltung der Erfindung wird also insbesondere bei hohen Drehzahlen sichergestellt, daß die Schaltverluste zu keiner Temperaturüberhöhung in den Halbleiterventilen führen.

Vorteilhafterweise wird als Stromregler ein Zwei-Punkt-Regler mit veränderlicher Hysterese bzw. ein Regler vom PI-Typ mit variabler Frequenz eingesetzt.

Die Erfindung wird anhand der nachfolgenden Figuren näher erläutert.

Es zeigt:
- Fig. 1: eine Ausführungsform der erfindungsgemäßen Schaltungsanordnung als Blockschaltbild,
- Fig. 2a: das zeitliche Verhalten des Stromes bei konstanter Hysterese
und
- Fig. 2b: das zeitliche Verhalten des Stromes bei variabler Hysterese gemäß einer Ausführungsform der erfindungsgemäßen Schaltungsanordnung.

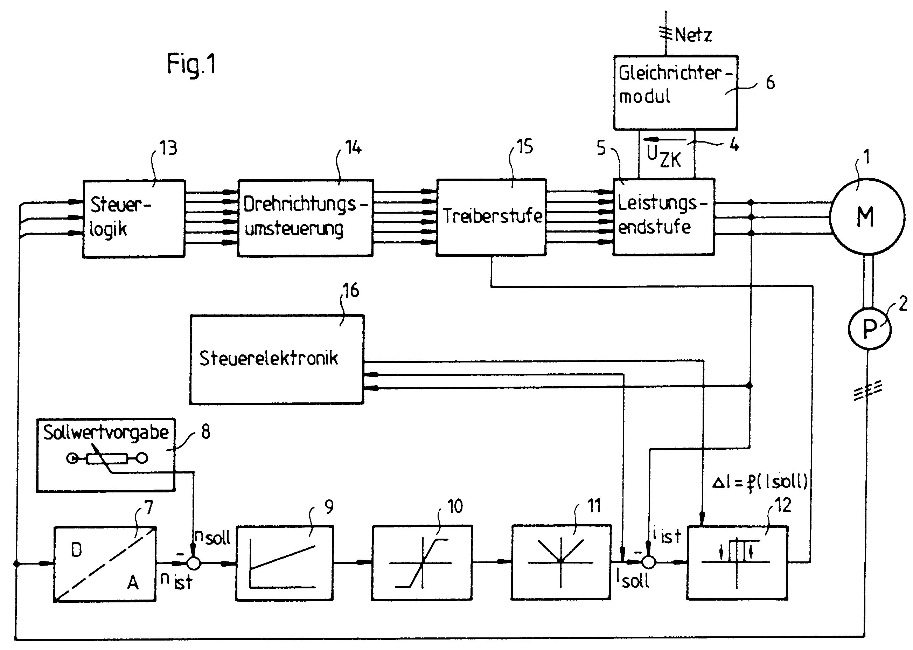

Fig. 1 zeigt ein Blockschaltbild einer Ausführungsform der erfindungsgemäßen Schaltungsanordnung. Die Ausführungsform bezieht sich auf einen bürstenlosen Gleichstrommotor 1 mit permanent-magnetischem Rotor und drei Phasenwicklungen. Dem Gleichstrommotor 1 ist in bekannter Weise ein Rotorlagegeber 2 zugeordnet, der die Kommutierungssignale für die Phasenwicklungen des Gleichstrommotors 1 liefert. Die Ansteuerung der Phasenwicklungen des Motors 1 erfolgt gemäß den Kommutierungssignalen des Rotorlagegebers 2 über einen Gleichspannungs-Zwischenkreis-Umrichter, der aus einem netzseitigen Gleichrichtermodul 6 und aus einer maschinenseitigen Leistungsendstufe 5 besteht. Die Leistungsendstufe ist im vorliegenden Fall eine drei-phasige Drehstrombrücke mit sechs Leistungstransistoren und zu diesen antiparallel geschalteten Freilaufdioden. Zwischen dem Gleichrichtermodul 6 und der Leistungsendstufe 5 liegt der Gleichspannungs-Zwischenkreis 4 mit eingeprägter Gleichspannung U_{ZK}. Die fortlaufende Schaltung der Leistungstransistoren der Leistungsendstufe 5 erfolgt über die Steuerlogik 13 und die Drehrichtungsumsteuerung 14 mit nachgeschalteter Treiberstufe 15.

Die digitalen Signale des Rotorlagegebers 2 werden zur Ermittlung des Drehzahl-Istwertes herangezogen. Hierzu werden diese Signale von der Drehzahl-Istwertaufbereitung (D/A-Wandler) 9 in eine analoge Spannung umgesetzt. Da bei der dargestellten Drehzahl-Istwertaufbereitung 9 kein externer Tacho zur Drehzahl-Istwerterfassung notwendig ist, ist diese Lösung besonders kostengünstig. Der Drehzahl-Sollwert n_{Soll} wird von der Sollwertvorgabe 10 zur Verfügung gestellt. Die Drehzahlregelung erfolgt in bekannter Weise mittels eines Drehzahlreglers 11, bei dem es sich beispielsweise um einen PI-Regler handelt, einer Strombegrenzung 12 und einem Betragsbildner 13. Am Ausgang des Betragsbildners 13 steht der Sollwert I_{Soll} des Motorstroms für die der Drehzahlregelung unterlagerte Stromregelung an. Der Istwert I_{Ist} des Motorstromes wird in den einzelnen Phasenwicklungen des bürstenlosen Gleichstrommotors 1 gemessen. Sobald eine Abweichung zwischen dem Strom-Sollwert I_{Soll} und dem Strom-Istwert I_{Ist} auftritt, wird sie über den Stromregler 12 kompensiert. Bei diesem Stromregler 12 handelt es sich in dem in Fig. 1 dargestellten Fall um einen mit einer Hysterese Δ I behafteten Zwei-Punkt-Regler, der den Strom I bei Erreichen eines oberen Grenzwertes ausschaltet und bei Erreichen eines unteren Grenzwertes einschaltet. Die Hysterese Δ I des Stromreglers 12 ist nicht konstant, sondern hängt funktional von dem Stromwert des Gleichstrommotors 1 ab. Bei dem Stromwert handelt es sich entweder um den Strom-Sollwert I_{Soll}, der am Ausgang des Betragsbildners 11 ansteht, oder um den Strom-Istwert I_{Ist}, der in den Phasenwicklungen des bürstenlosen Gleichstrommotors 1 gemessen wird. Die funktionale Abhängigkeit f(I) der Hysterese Δ I von dem Stromwert I wird von einer Steuerelektronik 16 vorgegeben. Die funktionale Abhängigkeit, beispielsweise die Proportionalität, zwischen Hysterese Δ I und Strom I ist in der Steuerelektronik 16 in Form von Kennlinien abgelegt. Denkbar wäre es jedoch auch, daß die Steuerelektronik 16 den günstigsten Hysteresewert Δ I in Abhängigkeit vom Strom I berechnet.

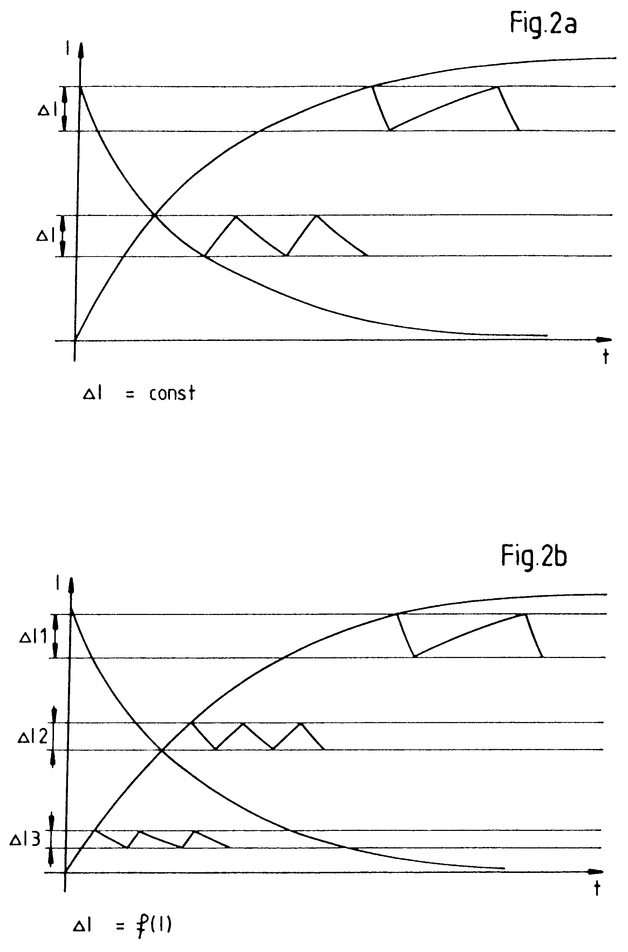

In Fig. 2a ist das zeitliche Verhalten des Stromes I bei konstanter Hysterese Δ I dargestellt. Die Stromregelung mit konstanter Hysterese arbeitet solange verläßlich, solange der eingestellte Strom nicht in der Größenordnung der eingestellten Hysterese Δ I liegt. Sobald der Strom I im Bereich der Hysterese Δ I liegt, ist eine exakte Stromregelung nicht mehr möglich, da der Strom Sprungstellen aufweist.

Fig. 2b zeigt das zeitliche Verhalten des Stromes I bei variabler Hysterese Δ I gemäß der erfindungsgemäßen Schaltungsanordnung. Dargestellt ist der Fall einer linearen Abhängigkeit zwischen der Hysterese Δ I und dem Strom I. Im Bereich hoher Ströme wird die Hysterese Δ I in der üblichen Größenordnung gewählt, wobei lediglich darauf geachtet werden muß, daß die zulässige Grenze für die mit den Schaltverlusten verbundene Temperaturerhöhung der Halbleiterventile nicht überschritten wird. Im Bereich niedriger Ströme wird durch die Proportionalität zwischen Hysterese Δ I und Strom I erreicht, daß eine Stromregelung auch noch im unteren Drehzahlbereich verläßlich möglich ist, da die Hysterese Δ I auch hier stets nur einen Bruchteil des Stromes I ausmacht.

### BEZUGSZEICHENLISTE

- 1: Bürstenloser Gleichstrommotor
- 2: Polradlagegeber
- 3:
- 4: Gleichspannungs-Zwischenkreis
- 5: Leistungsendstufe
- 6: Gleichrichtermodul
- 7: D/A-Wandler
- 8: Sollwert-Vorgabe
- 9: Drehzahlregler
- 10: Strombegrenzer
- 11: Betragsbildner
- 12: Stromregler
- 13: Steuerlogik
- 14: Drehrichtungs-Umsteuerung
- 15: Treiberstufe
- 16: Steuerelektronik
- Δ I: Hysterese
- I: Strom
- I_{Soll}: Strom-Sollwert
- I_{Ist}: Strom-Istwert
- n: Drehzahl

## Patentansprüche

1. Schaltungsanordnung für eine induktive Last mit einem Rotor und mindestens einer Wicklung, wobei die Wicklung über einen Gleichspannungs-Zwischenkreis und mindestens ein schaltbares Halbleiterventil einer Leistungsendstufe bestromt wird und wobei die Stromregelung über einen hysteresebehafteten Stromregler erfolgt,
**dadurch gekennzeichnet**,
daß eine Steuerelektronik (16) vorgesehen ist, die die Hysterese (ΔI) bzw. die Frequenz des Stromreglers (12) in Abhängigkeit vom Strom vorgibt.

2. Schaltungsanordnung nach Anspruch 1,
**dadurch gekennzeichnet**,
daß die Steuerelektronik (16) die Hysterese (ΔI) bzw. die Frequenz so bestimmt, daß der Mittelwert des Stromes (I) funktional vom Strom (I) abhängt.

3. Schaltungsanordnung nach Anspruch 1,
**dadurch gekennzeichnet**,
daß die Hysterese (ΔI) bzw. die Frequenz eine funktionale Abhängigkeit vom Strom-Sollwert (I_{Soll}) oder vom Strom-Istwert (I_{Ist}) aufweist.

4. Schaltungsanordnung nach Anspruch 1, 2 oder 3,
**dadurch gekennzeichnet**,
daß die Hysterese (ΔI) bzw. die Frequenz proportional zum Strom I ist.

5. Schaltungsanordnung nach Anspruch 1,
**dadurch gekennzeichnet**,
daß die Steuerelektronik (16) die Hysterese ( I) bzw. die Frequenz so vorgibt, daß die Schaltverluste der schaltbaren Halbleiterventile der Leistungsendstufe (5) die thermisch maximal zulässige Grenze nicht überschreiten.

6. Schaltungsanordnung nach einem oder mehreren der vorhergehenden Ansprüche,
**dadurch gekennzeichnet**,
daß es sich bei dem Stromregler (12) um eine Zwei-Punkt-Regler oder um einen PI-Regler handelt.

7. Schaltungsanordnung nach Anspruch 1,
**dadurch gekennzeichnet**,
daß es sich bei der induktiven Last um einen bürstenlosen Gleichstrommotor (1) handelt.
